# EUROPEAN PATENT APPLICATION

(11) **EP 0 899 416 A1**
(43) Date of publication of application: **03.03.1999**
(21) Application number: 98306617.6
(22) Date of filing: 18.08.1998
(51) Int. Cl.: E21B 33/13, E21B 33/138

(54) **Method of sealing conduits in lateral well bores**

(30) Priority: 18.08.1997 US 914594; 26.11.1997 US 979047
(71) Applicant: Halliburton Energy Services, Inc., Duncan, Oklahoma 73536 (US)
(72) Inventor: Chatterji, Jiten, Duncan, Oklahoma 73533 (US); Cromwell, Roger S., Walters, Oklahoma 73572 (US); Onan, David D., Duncan, Oklahoma 73533 (US); King, Bobby J., Oklahoma 73533 (US)
(74) Representative: Wain, Christopher Paul

(57) **Abstract**

Conduits in multi-lateral wells are sealed whereby the sealant can withstand stress induced conduit movements without failure, by placing a hardenable epoxy composition in a lateral well bore between a conduit therein and the walls of the lateral well bore, and allowing it to harden, the epoxy composition having flexibility and resiliency upon hardening and comprising an epoxide-containing liquid or an epoxy resin and an epoxide-containing liquid and a hardening agent.

## Description

The present invention relates generally to a method of sealing conduits in lateral well bores whereby the sealant can withstand stress induced conduit movements without failure.

Hydraulic cement compositions are commonly utilized in oil, gas and water well completion and remedial operations. For example, hydraulic cement compositions are used in primary cementing operations whereby a conduit such as a string of casing is cemented in a well bore. In performing primary cementing, a hydraulic cement composition is pumped into the annular space between the walls of the well bore and the exterior of a string of casing disposed therein. The cement composition is permitted to set in the annular space thereby forming an annular sheath of hardened substantially impermeable cement therein. The cement sheath physically supports and positions the casing in the well bore and bonds the casing to the walls of the well bore whereby the undesirable migration of fluids between zones or formations penetrated by the well bore is prevented.

The development of wells including one or more laterals to increase production has recently taken place. Such wells include vertical or deviated principal well bores having one or more laterally extending well bores connected thereto. Drilling and completion equipment has been developed which allows lateral well bores to be drilled from a principal well bore in which casing has previously been cemented. Each of the lateral well bores usually includes a conduit, known in the art as a liner, cemented therein which is tied into the conduit (casing) in the principal well bore.

While single lateral and multi-lateral wells have been successfully drilled and operated, a problem in the operation involves the cement utilized to bond and seal the conduits in the lateral well bores. Such conduits have been cemented in lateral well bores by introducing cement slurries into the annular clearances between the walls of the well bores and the conduits. The cement slurries set into hard masses to thereby support the conduits in the well bores and to seal the annuluses whereby fluid flow through the annuluses between formations and zones is prevented. Typically, the cement slurries which have been utilized set into brittle solid masses, and as a result, they cannot withstand the conduit movements caused by impacts and shocks subsequently generated by drilling and other well operations carried out in the laterals without cracking or shattering. Once the set cement is cracked or shattered, it allows leakage of fluid through at least portions of the well bores which is often highly detrimental.

Thus, there are needs for improved methods of sealing conduits in lateral well bores whereby the sealant can withstand stress induced conduit movements without failure.

We have now devised a way of sealing a conduit in a lateral well bore whereby the needs described above can be met and the deficiencies of the prior art reduced or overcome.

In one aspect, the invention provides a method of bonding and sealing a conduit in a lateral well bore whereby the sealant can withstand stress induced conduit movements without failure which method comprises placing a hardenable epoxy sealant composition in the well bore between said conduit and the walls of the well bore; and allowing the epoxy composition to harden in said well bore; wherein said composition has a viscosity at 25°C of from 10 to 100 centipoises, high degrees of flexibility and resiliency upon hardening, and comprises an epoxide-containing liquid and a hardening agent.

In another aspect, the invention provides a method of bonding and sealing a conduit in a lateral subterranean well bore connected to a principal well bore whereby the sealant can withstand stress induced conduit movement without failure, which method comprises pumping a hardenable epoxy resin sealant composition into said lateral well bore between said conduit therein and the walls of said lateral well bore; and allowing said epoxy resin composition to harden in said lateral well bore; wherein said sealant composition has a viscosity at 25°C in the range from 90 to 120 centipoises, high degrees of flexibility and resiliency upon hardening, and comprises an epoxy resin selected from the condensation products of epichlorohydrin and bisphenol A, an epoxide-containing liquid and a hardening agent.

By the present invention, an improved method of bonding and sealing a conduit in a lateral well bore is provided whereby the sealant utilized can withstand stress induced conduit movements caused by impacts, shocks and the like generated by drilling and other well operations subsequently carried out in the well bore. The method basically comprises the steps of preparing a hardenable epoxy sealant composition which has a pumping time and viscosity such that it can be pumped into the lateral well bore between the conduit therein and the walls of the well bore. Because of its low viscosity, the sealant composition enters the porosity of the subterranean stratum forming the walls of the well bore whereby upon hardening it forms a strong bond between the conduit and the walls. Also upon hardening, the sealant has high degrees of flexibility and resiliency whereby it can withstand stress induced conduit movements without failure. Once prepared, the epoxy sealant composition is pumped into the lateral well bore between the conduit and the walls of the well bore. Thereafter, the epoxy composition is allowed to harden whereby the conduit is bonded and sealed in the well bore.

In applications where an epoxy sealant composition having a very low viscosity is required in order for the composition to be able to enter the pores of the stratum forming the walls of a well bore, i.e., a viscosity in the range of from about 10 to about 100 centipoises, an epoxy sealant composition comprised of an epoxide containing liquid and a hardening agent is utilized. While various low viscosity epoxide containing liquids can be used, preferred such liquids are selected from the group of diglycidyl ethers of 1,4-butanediol, neopentyl glycol and cyclohexane dimethanol. A suitable epoxide containing liquid comprised of the diglycidyl ether of 1,4-butanediol is commercially available from the Shell Chemical Company of Houston, Texas under the trade name "HELOXY®67". This epoxide containing liquid has a viscosity at 25□C in the range of from about 13 to about 18 centipoises, a molecular weight of 202 and a one gram equivalent of epoxide per about 120 to about 130 grams of the liquid. A suitable diglycidyl ether of neopentyl glycol is commercially available from Shell Chemical Company under the trade designation "HELOXY®68". This epoxide containing liquid has a viscosity at 25□C in the range of from about 13 to about 18 centipoises, a molecular weight of 216 and a one gram equivalent of epoxide per about 130 to about 140 grams of the liquid. A suitable diglycidyl ether of cyclohexane dimethanol is commercially available from Shell Chemical Company under the trade designation "HELOXY®107". This epoxide containing liquid has a viscosity at 25□C in the range of from about 55 to about 75 centipoises, a molecular weight of 256 and a one gram equivalent of epoxide per about 155 to about 165 grams of the liquid.

A variety of hardening agents, including, but not limited to, aliphatic amines, aliphatic tertiary amines, aromatic amines, cycloaliphatic and heterocyclic amines, amido amines, polyamides, polyethyl amines and carboxylic acid anhydrides can be utilized with the above described epoxide containing liquids. Examples of suitable aliphatic amines are triethylenetetramine, ethylenediamine, N-cocoalkyltrimethylenediamine, isophoronediamine, N-aminoethyl piperazines, imidazoline, and 1,2-diaminecyclohexane. Examples of suitable carboxylic acid anhydrides are methyltetrahydro-phthalic anhydride, hexahydrophthalic anhydride, maleic anhydride, polyazelaic polyanhydride and phthalic anhydride. Of these, triethylenetetramine, ethylenediamine, N-cocoalkyltrimethylenediamine, isophoronediamine and diethyltoluenediamine are preferred, with isophoronediamine and diethyltoluenediamine being the most preferred. The hardening agent utilized is generally included in the epoxy sealant composition in an amount in the range of from about 15% to about 31% by weight of the epoxide containing liquid in the composition, most preferably about 25%.

In multilateral junction sealing applications, fillers such as crystalline silicas, amorphous silicas, clays, calcium carbonate or barite can be included in the epoxy sealant composition. When such a filler is utilized, it is generally present in the composition in an amount in the range of from about 100% to about 150% by weight of the composition.

In applications where a higher viscosity epoxide resin sealing composition can be used, i.e., a viscosity in the range of from about 90 to about 120 centipoises, an epoxide resin composition comprised of an epoxy resin, an epoxide containing liquid and a hardening agent is utilized. While various epoxy resins can be used, preferred such resins are those selected from the condensation products of epichlorohydrin and bisphenol A. A particularly suitable such resin is commercially available from the Shell Chemical Company under the trade designation "EPON® RESIN 828". This epoxy resin has a molecular weight of 340 and a one gram equivalent of epoxide per about 180 to about 195 grams of resin.

An epoxide containing liquid, preferably of one of the types described above, i.e., an epoxide containing liquid selected from the group of diglycidyl ethers of 1,4-butanediol, neopentyl glycol and cyclohexane dimethanol, is utilized to modify the viscosity of the epoxy resin used and add flexibility and resiliency to the resulting composition after hardening. The epoxide containing liquid is included in the epoxy resin composition in an amount in the range of from about 15% to about 40% by weight of the epoxy resin in the composition, most preferably in an amount of about 25%.

The hardening agent is preferably selected from the group of aliphatic amines and acid anhydrides set forth above, with triethylenetetramine, ethylenediamine, N-cocoalkyltrimethylenediamine, isophoronediamine and diethyltoluenediamine being preferred. The most preferred hardening agents are isophoronediamine and diethyltoluenediamine. The hardening agent is included in the epoxy resin composition in an amount in the range of from about 5% to about 45% by weight of the composition, preferably in an amount of about 30%.

As mentioned above in connection with the low viscosity epoxy composition, the higher viscosity epoxy resin composition can include a filler such as crystalline silicas, amorphous silicas, clays, calcium carbonate or barite. When used, the filler is present in the composition in an amount in the range of from about 100% to about 150% by weight of the composition.

The above described epoxy resin composition can be dispersed in an aqueous carrier liquid to enhance the ability of the composition to enter the porosity of water wet strata. To facilitate preparing the aqueous dispersion, a water borne epoxy resin which is commercially available from the Shell Chemical Company under the trade designation "EPI-REZ®" can be utilized. The epoxide containing liquid and hardening agent used with the epoxy resin can be dispersed or dissolved in the water borne epoxy resin to form an aqueous dispersion of the epoxy resin composition.

In order to further illustrate the methods and compositions of this invention, the following example is given.

### Example 1

A number of epoxy sealant compositions useful in accordance with this invention were prepared containing the components and in the amounts shown in the Table below. The compositions were tested for thickening times, compressive strengths, shear bond strengths and tensile strengths in accordance with the procedures set forth in API Specification For Materials And Testing For Well Cements, API Specification 10, 5th Edition, dated July 1, 1990 of the American Petroleum Institute. The results of these tests are set forth in the Table below:

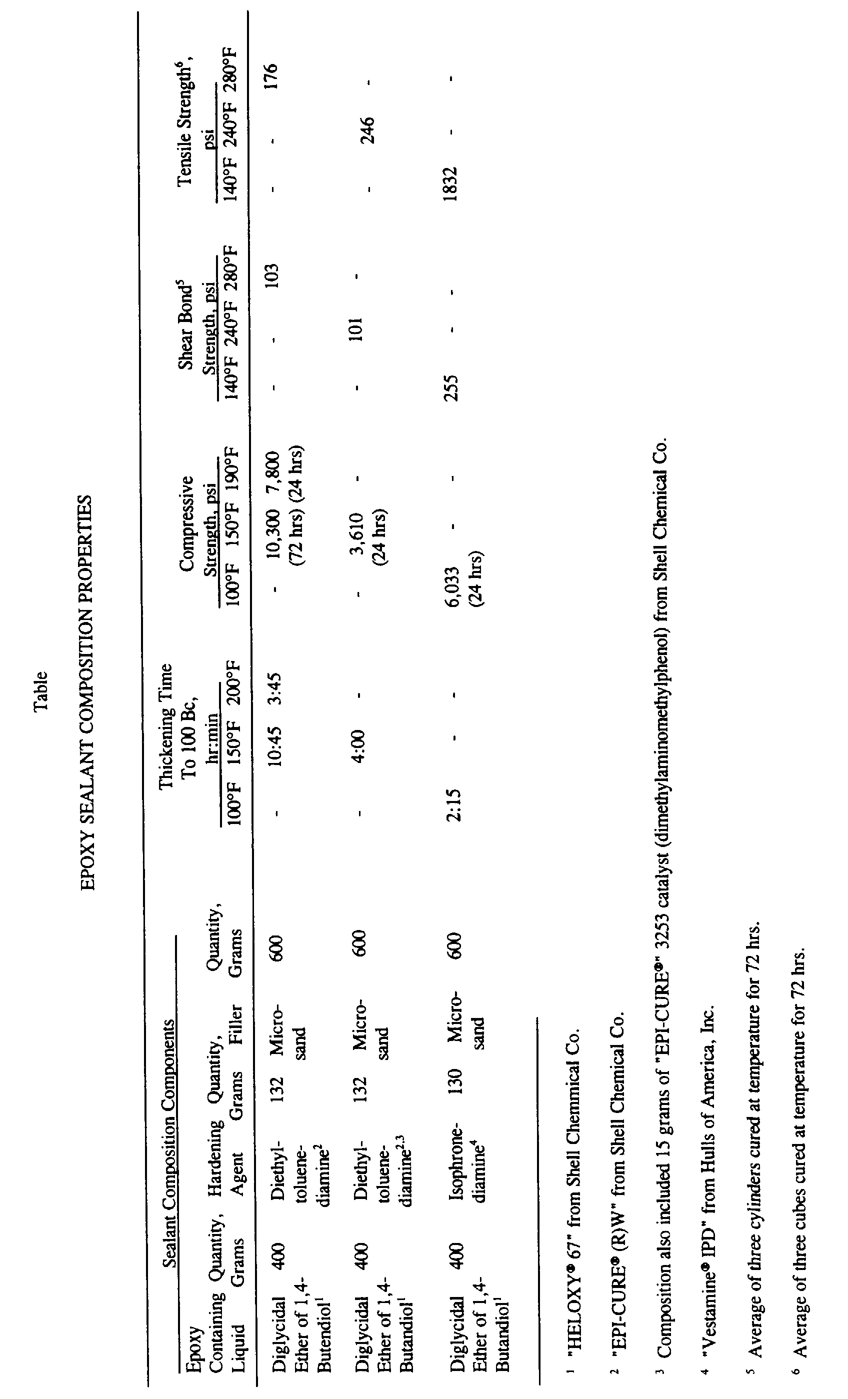

From the Table, it can be seen that the epoxy sealant compositions have excellent properties for sealing conduits in lateral well bores.

### Example 2

An epoxy sealant composition was prepared comprised of 600 grams of diglycidyl ether of cyclohexane dimethanol ("HELOXY® 107" from Shell Chemical Company), 600 grams of microsand and 140 grams of diethyltoluenediamine ("EPI-CURE®(R)W" from Shell Chemical Company). The epoxy sealant composition was allowed to harden in a cylinder for 24 hours at 250□F. The weight of the resulting hardened cylindrical composition was determined to be 272.36 grams. The cured composition was then submerged in crude oil in an autoclave at 250□F for 72 hours. At the end of the 72 hours, the composition was rinsed with acetone and it was again weighed. The weight was determined to be 272.68 grams. Thus, the hardened epoxy sealant composition was not dissolved or otherwise weakened by prolonged contact with hot crude oil as would be the case when the epoxy resin was used to seal a conduit in a lateral well bore penetrating a deep crude oil reservoir.

## Claims

1. A method of bonding and sealing a conduit in a lateral well bore whereby the sealant can withstand stress induced conduit movements without failure which method comprises placing a hardenable epoxy sealant composition in the well bore between said conduit and the walls of the well bore; and allowing the epoxy composition to harden in said well bore; wherein said composition has a viscosity at 25°C of from 10 to 100 centipoises, high degrees of flexibility and resiliency upon hardening, and comprises an epoxide-containing liquid and a hardening agent.

2. A method according to claim 1, wherein said epoxide-containing liquid is selected from diglycidyl ethers of 1,4-butanediol, neopentyl glycol and clycohexane dimethanol.

3. A method according to claim 1 or 2, wherein said hardening agent is an aliphatic amine or anhydride.

4. A method according to claim 1 or 2, wherein said hardening agent is triethylenetetramine, ethylenediamine, N-cocoalkyltrimethylenediamine, isophoronediamine or diethyltoluenediamine, and is present in said composition in an amount of from 15% to 31% by weight of said epoxide-containing liquid in said composition and preferably when the hardening agent is isophoronediamine, it is present in said composition in an amount of 25% by weight of said epoxide-containing liquid in said composition.

5. A method according to claim 1, 2, 3 or 4, wherein said epoxy composition further comprises a filler selected from crystalline silicas, amorphous silicas, clays, calcium carbonate and barite.

6. A method of bonding and sealing a conduit in a lateral subterranean well bore connected to a principal well bore whereby the sealant can withstand stress induced conduit movement without failure, which method comprises pumping a hardenable epoxy resin sealant composition into said lateral well bore between said conduit therein and the walls of said lateral well bore; and allowing said epoxy resin composition to harden in said lateral well bore; wherein said sealant composition has a viscosity at 25°C in the range from 90 to 120 centipoises, high degrees of flexibility and resiliency upon hardening, and comprises an epoxy resin selected from the condensation products of epichlorohydrin and bisphenol A, an epoxide-containing liquid and a hardening agent.

7. A method according to claim 6, wherein said epoxy resin has a molecular weight of about 340 and a one gram equivalent of epoxide per 180 to 195 grams of resin.

8. A method according to claim 6 or 7, wherein said hardenable epoxy resin composition is dispersed in an aqueous carrier liquid.

9. A method according to claim 6, 7 or 8, wherein said epoxide-containing liquid is selected from diglycidyl ethers of 1,4-butanediol, neopentyl glycol and cyclohexane dimethanol, and is present in said composition in an amount of from 15% to 40% by weight of said epoxy resin in said composition.

10. A method according to claim 6, 7, 8 or 9, wherein said epoxide-containing liquid has a molecular weight of from 200 to 260 and a one gram equivalent of epoxide per 120 to 165 grams of said liquid.

11. A method according to any of claims 6 to 10, wherein said hardening agent is triethylenetetramine, ethylenediamine, N-cocoalkyl-trimethylenediamine, isophoronediamine or diethyltoluenediamine.

12. A method according to any of claims 6 to 11, wherein said hardening agent is present in said composition in an amount of from 5% to 45% by weight of said composition.

13. A method according to any of claims 6 to 12, wherein said epoxide-containing liquid is selected from diglycidyl ethers of 1,4-butanediol, neopentyl glycol and cyclohexane dimethanol, and is present in said composition in an amount of 25% by weight of said epoxy resin in said composition.

14. A method according to any of claims 6 to 13, wherein said epoxy resin composition further comprises a filler selected from crystalline silicas, amorphous silicas, clays, calcium carbonate and barite, preferably in an amount of from 100% to 150% by weight of said composition.
